# FASCICULE DE BREVET EUROPEEN

(11) **EP 1 139 115 B1**
(45) Date de publication et mention de la délivrance du brevet: **10.09.2008**
(21) Numéro de dépôt: 01400767.8
(22) Date de dépôt: 23.03.2001
(51) Int. Cl.: G01S 1/50, G01S 1/04, G01S 1/02

(54) **Procédé et dispositif pour corriger la variation du QDM d'un système de navigation**
Verfahren und Vorrichtung zur Korrektion von QDM-Schwankungen eines Navigationssystems
Method and system for correcting QDM variations of a navigation system

(30) Priorité: 31.03.2000 FR 0004134
(43) Date de publication de la demande: 04.10.2001
(73) Titulaire: Thales, 92200 Neuilly Sur Seine (FR)
(72) Inventeur: Pina, François, Thomson-CSF Prop. Intellectuelle, 94117 Arcueil Cedex (FR); Blouet, Christophe, Thomson-CSF Prop. Intellect., 94117 Arcueil Cedex (FR)
(74) Mandataire: Dudouit, Isabelle

(56) Documents cités:
- US-A- 4 104 637
- US-A- 4 495 473
- ISOHOOKANA M ET AL: "IMPLEMENTATION OF A VOR/ILS PRECISION DETECTOR USING THE TMS32010 DIGITAL SIGNAL PROCESSORS" PROCEEDINGS OF THE EUROPEAN SIGNAL PROCESSING CONFERENCE,NL,AMSTERDAM, ELSEVIER, vol. CONF. 5, 18 septembre 1990 (1990-09-18), pages 1931-1934, XP000365937

## Description

La présente invention concerne un procédé et un dispositif permettant de corriger la variation ou dérive de la différence de phase Δϕ existant entre deux signaux générés par un signal de fréquence Fe = 2πΩ, une dérive dans la valeur de Fe provoquant la dérive dans la valeur de la différence de phase.

L'invention s'applique notamment pour corriger la dérive de la valeur du QDM (code habituellement employé dans le domaine de la navigation pour désigner l'angle θ que fait un mobile avec le nord magnétique), afin de satisfaire à certaines normes telles que EUROCAE ED-22B, RTCA, ARINC MARK 2 AIRBORNE VOR RECEIVER 711-9, la dérive résultant d'une variation dans la fréquence de rotation.

L'invention s'applique par exemple, mais non exclusivement, dans le domaine de la navigation aérienne, la navigation en mer ou fluviale.

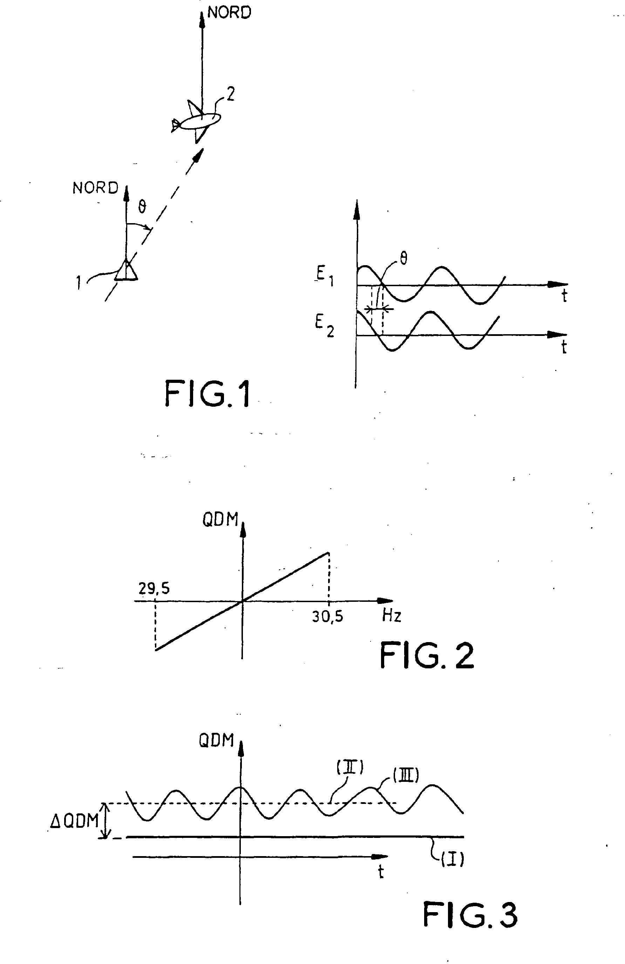

La figure 1 représente le principe de fonctionnement du système permettant de déterminer à bord d'un mobile ou aéronef, par exemple un avion, la direction dans laquelle il est à un lieu donné et vu d'un radiophare. Une onde entretenue est émise suivant un diagramme de rayonnement cardioïdal tournant à 30 tr/s ; en même temps, une antenne omnidirectionnelle émet un signal de référence à 30 Hz en modulant en fréquence. Le récepteur de bord détecte la modulation d'amplitude à 30 Hz causée par la rotation du diagramme et le signal de référence. L'azimut du récepteur vu de la station ou balise VOR 1 est égal au déphasage entre les deux signaux E₁ et E₂; E₁ étant la modulation due à la rotation du diagramme et E₂ la référence émise.

Une variation de la fréquence 30 Hz provoque une dérive linéaire de la différence de phase et le battement introduit au niveau du signal comme le montrent les figures 2 et 3.

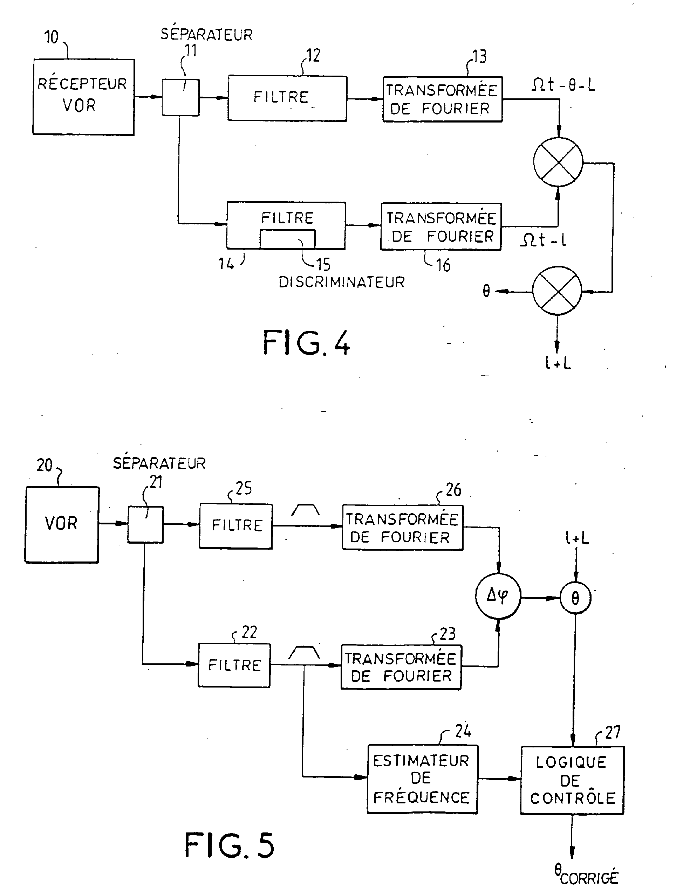

La figure 4 est un exemple de chaîne de traitement selon l'art antérieur.

Une technique de récepteur VOR numérique classique consiste à appliquer un filtre séparateur pour traiter deux bandes de fréquence, la basse fréquence modulée AM et la haute fréquence modulée FM, à appliquer un discriminateur de fréquence pour récupérer la fréquence modulante FM et à comparer les phases des deux signaux.

Le signal composite VOR après réception par un récepteur 10 est séparé au moyen d'un séparateur 11 en un signal basse fréquence (BF) modulé AM et un signal haute fréquence (HF) modulé FM.

Le signal basse fréquence (BF) est transmis à un filtre linéaire 12 puis échantillonné 13 afin de déterminer sa phase ϕ1 à l'aide d'une transformée de Fourier.

Le signal haute fréquence (HF) est envoyé tout d'abord à un filtre non linéaire 14 puis échantillonné 16 afin de déterminer sa phase ϕ2 en mettant en oeuvre une transformée de Fourier. Le filtre non linéaire comporte un discriminateur de fréquence 15 ayant notamment pour fonction de récupérer la fréquence modulante FM.

A partir des deux phases ϕ1 et ϕ2, la valeur de déphasage Δϕ correspondant au QDM (au paramètre près des termes de déphasage introduits par les filtres) est déterminée par exemple à l'aide d'un calculateur programmé en conséquence.

Au cours du procédé de traitement du signal, l'opération d'échantillonnage des signaux (BF) et (HF) par transformée de Fourier peut engendrer des raies parasites (ou spurious) lorsque la période du signal analysée n'est pas un multiple de la fenêtre temporelle d'analyse.

Pour pallier ce problème, il est connu d'utiliser des fenêtres classiques telle que Hamming généralisée permettant de réduire les lobes secondaires du spectre tout en élargissant le lobe principal, ou celle de Kaiser associant à un signal temporel à support fini un spectre infini. Ces deux méthodes présentent toutefois des performances limitées et perturbent le rapport signal/bruit à temps d'intégration égal.

Il est aussi possible d'utiliser une méthode à banc de filtre de type DFT. Dans ce cas la puissance de calcul nécessaire est très important et conduit à des coûts d'investissement incompatibles avec certaines applications.

La figure 3 représente dans un repère où l'axe des abscisses est l'axe temporel et l'axe des ordonnées la dérive du QDM :
➢ La courbe (I) qui correspond à la valeur QDM(Fe) pour la fréquence de référence Fe ou la période correspondante Ω,
➢ La courbe (II) correspond à la dérive du QDM et la courbe (III) à un battement provoqués par une dérive de la valeur de la fréquence de référence Fe.

Dans la suite de la description, on désigne par le terme QDM, l'angle pris par rapport au nord magnétique, désigné encore par le terme bearing.

L'invention consiste notamment à utiliser une relation reliant la dérive du QDM à une variation de la fréquence de référence et un estimateur de fréquence judicieusement positionné dans la chaîne de traitement pour corriger cette dérive.

Elle peut aussi utiliser fenêtre d'échantillonnage de forme trapézoïdale par exemple pour réaliser la transformée de Fourier.

L'invention concerne un procédé pour corriger la dérive du déphasage (Δϕ,θ) entre deux signaux (S₁) et (S₂), lesdits signaux étant générés par un signal ayant une fréquence de référence Fe ou une période correspondante Ω, la dérive du déphasge résultant d'une dérive en fréquence Fe ou en période selon une relation R((F,Ω),(θ,Δϕ)) donnée.

Il est aussi possible d'utiliser une méthode à banc de filtre de type DFT. Dans ce cas la puissance de calcul nécessaire est très important et conduit à des coûts d'investissement incompatibles avec certaines applications.

La figure 3 représente dans un repère où l'axe des abscisses est l'axe temporel et l'axe des ordonnées la dérive du QDM :
➢ La courbe (I) qui correspond à la valeur QDM(Fe) pour la fréquence de référence Fe ou la période correspondante Ω,
➢ La courbe (II) correspond à la dérive du QDM et la courbe (III) à un battement provoqués par une dérive de la valeur de la fréquence de référence Fe.

Le brevet US 4 495 473 concerne un dispositif utilisant une boucle de retour pour contrôler la fréquence et corriger le mécanisme de décalage de phase afin que la quantité de déphasage souhaitée apparaissent à toutes les fréquences.

Dans la suite de la description, on désigne par le terme QDM, l'angle pris par rapport au nord magnétique, désigné encore par le terme bearing.

L'invention consiste notamment à utiliser une relation reliant la dérive du QDM à une variation de la fréquence de référence et un estimateur de fréquence judicieusement positionné dans la chaîne de traitement pour corriger cette dérive.

Elle peut aussi utiliser fenêtre d'échantillonnage de forme trapézoïdale par exemple pour réaliser la transformée de Fourier.

L'invention concerne un procédé pour corriger la dérive du déphasage (Δϕ,θ) entre deux signaux (S₁) et (S₂), lesdits signaux étant générés par un signal reçu par un aéronef, ledit signal ayant une fréquence de référence Fe ou une période correspondante Ω, la dérive du déphasage résultant d'une dérive en fréquence Fe ou en période selon une relation R((F,Ω),(θ,Δϕ)) donnée.

Il est caractérisé en ce qu'il comporte au moins les étapes suivantes :
- déterminer la valeur du déphasage (Δϕ,θ), à partir de la phase ϕ1 du signal S₁ et de la phase ϕ2 du signal S₂,
- estimer Fₑₛₜ la valeur de fréquence Fe, ou la période correspondante Ω,
- ramener ladite valeur (Δϕ,θ) dans un intervalle de valeurs données [QDMmin, QDMmax] contenant la valeur QDM(Fe) obtenue pour la valeur Fe de référence en tenant compte des valeurs Δϕ et Fₑₛₜ, et de la relation R((F,Ω),(θ,Δϕ)).

Selon un mode de réalisation le procédé comporte par exemple une étape de traitement par transformée de Fourier utilisant une fenêtre d'échantillonnage dont la forme est sensiblement trapézoïdale.

L'invention concerne aussi un dispositif de correction de la dérive du déphasage (Δϕ,θ) existant entre deux signaux (S₁) et (S₂), lesdits signaux étant générés par un signal reçu par un aéronef, ledit signal ayant une fréquence de référence Fe, la dérive étant liée à la dérive en fréquence Fe selon une relation R((F,Ω),(θ,Δϕ)) donnée. Il est caractérisé en ce qu'il comporte au moins :
- un séparateur des signaux S₁ et S₂, des moyens pour déterminer la valeur de la phase ϕ1 et ϕ2 pour chacun des signaux et un moyen pour déterminer la valeur de déphasage Δϕ,
- un estimateur de la fréquence Fe ou de la période correspondante disposé après le séparateur,
- un dispositif comportant en mémoire la relation R((F,Ω),(θ,Δϕ)) recevant les valeurs Δϕ et de la fréquence estimée ou de la période correspondante estimée, adapté pour ramener la valeur de Δϕ dans un intervalle de valeurs données [QDMmin, QDMmax] contenant la valeur QDM(Fe) obtenue pour la valeur Fe (ou la période) de référence.

Selon un mode de réalisation il comporte par exemple des moyens de traitement des signaux (S₁) et/ou (S₂) par transformée de Fourier, la fenêtre d'échantillonnage ayant une forme sensiblement trapézoïdale.

L'estimateur pour estimer la valeur de fréquence peut être de type Prony.

L'invention concerne aussi un récepteur VOR comportant un dispositif de correction d'une dérive du déphasage (Δϕ,θ) existant entre deux signaux (S₁) et (S₂), lesdits signaux étant générés par un signal reçu par un aéronef, ledit signal ayant une fréquence de référence Fe, la dérive étant liée à la dérive en fréquence Fe ou à la dérive en période selon une relation R((F,Ω),(θ,Δϕ)) donnée caractérisé en ce qu'il comporte au moins :
- un séparateur des signaux S₁ et S₂, des moyens pour déterminer la valeur de la phase ϕ1 et ϕ2 pour chacun des signaux et un moyen pour déterminer la valeur de déphasage Δϕ,
- un estimateur de la fréquence Fe ou de la période correspondante disposé après le séparateur,
- un dispositif comportant en mémoire la relation R((F,Ω),(θ,Δϕ)) recevant les valeurs Δϕ et de la fréquence estimée Fₑₛₜ ou de la période correspondante estimée, et adapté pour ramener la valeur de Δϕ dans un intervalle de valeurs données [QDMmin, QDMmax] contenant la valeur QDM(Fe) obtenue pour la valeur Fe (ou la période) de référence.

Les procédés et les dispositifs selon l'invention s'appliquent par exemple pour réduire la variation du QDM d'un système de navigation ou de radio navigation.

Le procédé et le dispositif selon l'invention permettent notamment de respecter ou d'approcher le mieux possible des normes contraignantes, telles que les normes RTCA et EUROCAE, et d'améliorer la limite de détection par rapport aux dispositifs connus de l'art antérieur.

Le signal (HF) de forme sinusoïdale modulée à 332 fois la fréquence de référence Fe égale à 30 Hz et contenant la phase de référence (cos(332Ωt -msin(Ωt)) est filtré à travers un filtre non linéaire 25 puis échantillonné au moyen d'une transformée de Fourier 26 afin d'obtenir la valeur de phase ϕ2 correspondant à la valeur Ωt au paramètre I près du retard introduit par le discriminateur, avec ϕ2=Ωt-I, par exemple.

A partir des deux valeurs des phases ϕ1 et ϕ2, le procédé détermine la valeur du déphasage Δϕ, par exemple selon un calcul connu de l'Homme du métier mis en oeuvre au moyen d'un calculteur.

La chaîne de traitement comporte aussi un dispositif 27, qui contient en mémoire la relation R((F, Ω), (θ, Δϕ)) liant la dérive de bearing à la dérive de la fréquence de référence ou encore à la dérive de la période correspondante Ω. La logique de contrôle 27 reçoit la valeur de la fréquence estimée Fₑₛₜ ou la valeur de la période estimée Ωₑₛₜ et la valeur du bearing θ ou du déphasage Δϕ, ce qui permet à partir de la relation R((F,Ω),(θ,Δϕ)) de ramener la dérive en angle (θ,Δϕ) dans un intervalle de valeurs données [QDMmin, QDMmax] contenant par exemple la valeur QDM(Fe) obtenue pour la fréquence de référence Fe, ou autour d'une valeur donnée, telle que la valeur QDM(Fe).

La valeur de l'angle θ est calculée par exemple à partir de la valeur du déphasage Δϕ, en corrigeant cette dernière par une valeur correspondant aux valeurs des retards L et I introduits par les filtres linéaires et non linéaires.

Cette correction peut aussi être réalisée après avoir ramené la dérive en angle dans l'intervalle de valeurs données.

Dans cet exemple de réalisation, la relation R((F,Ω),(θ, Δϕ)) reliant la dérive de la valeur de la fréquence de référence Fe et la dérive de la valeur du QDM, est une relation linéaire telle que décrite à la figure 2. Sur cette figure 2 l'abscisse représente la valeur de la fréquence F variant dans un intervalle [29,5 Hz ; 30,5 Hz], autour de la valeur de référence Fe= 30 Hz et en ordonnée, la valeur de la dérive du QDM exprimée en radian ou en degré.

Les valeurs limites QDM max et QDM min sont par exemple choisies en fonction de la norme à respecter, par exemple une des normes citées précédemment.

La relation R((F,Ω),(θ,Δϕ)) peut être établie au cours d'essais préalables où l'on enregistre pour différentes valeurs de fréquence variant autour d'une valeur de référence Fe donnée, la valeur de déphasage afin d'établir une base de données ((F, Ω), (Δϕ,θ)).

Les transformées de Fourier, le calcul du déphasage ainsi que la correction sur la valeur du déphasage sont réalisées par exemple à l'aide d'un microprocesseur ou calculateur programmé selon une méthode connue de l'Homme du métier.

L'estimateur de fréquence 24 est positionné en fin de la chaîne de traitement, notamment après le filtre. Cet estimateur de fréquence est par exemple un estimateur de Prony décrit dans le document IEEE SIGNAL PROCESSING LETTERS VOL.3, N°2, February 1996 « Instantaneous Frequency Estimation Using Linear Prediction with Comparisons to the DESAs ».

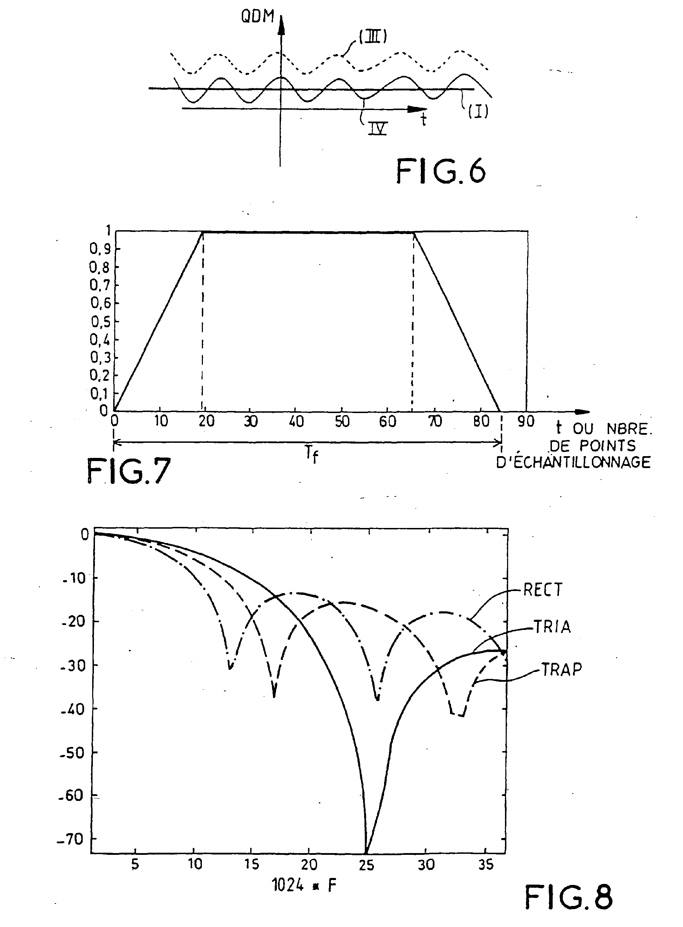

La figure 6 représente dans un diagramme temps-(degré ou radian), la correction apportée dans la valeur du QDM en mettant en oeuvre les étapes du procédé selon l'invention. La courbe (III) correspond à la valeur de la dérive du QDM obtenue sans utilisation d'un estimateur de fréquence; elle est ramenée (courbe IV) vers la valeur du QDM obtenue pour la valeur de référence Fe représentée par la droite (I).

L'exemple numérique qui suit est donné pour un signal de référence Fe sensiblement égal à 30 Hz dans le cadre de l'application VOR.

Dans ce cas, le signal en sortie du filtre linéaire 22 est une forme sinusoïdale à 30 Hz pour laquelle l'amplitude du spectre des harmoniques indésirables qui la compose peut être atténuée par un filtre Butterworth du 8^{ème} ordre placé avant l'estimateur de fréquence 24.

Le signal VOR est échantillonné à 26 560 Hz et l'entrée du Butterworth est une forme sinusoïdale échantillonnée à 207,5 Hz. Donc, seulement 7 échantillons sont représentatifs d'une période de signal. Parmi ces 7 échantillons, seulement 4 sont utilisés pour estimer la fréquence. La fréquence ou la période sont généralement estimées et une logique de contrôle corrige le QDM lorqu'elle reste stable et dans les standards par exemple (29,55 Hz ; 30,45Hz).

La précision expérimentale de la valeur de la fréquence estimée est de 10⁻⁴ sans perte d'énergie permettant d'éliminer l'erreur statique.

En procédant de cette façon, il est possible de respecter les normes précédemment citées et de rester dans la tolérance de variation pour le QDM de +/- 0,4 degré par rapport à la valeur QDM(Fe) malgré une variation de la fréquence Fe= 30 Hz de +/- 1,5 %. Ceci correspond par exemple à un intervalle de valeurs QDMmin=(QDM(Fe)-0,4°) et QDMmax=(QDM(Fe)+0,4°).

Selon un mode de mise en oeuvre du procédé, le procédé utilise une fenêtre temporelle de forme trapézoïdale ou sensiblement trapézoïdale pour effectuer la transformée de Fourier du signal, afin de limiter les effets de phase initiale et de phase finale dans l'analyse spectrale. L'amplitude du signal est ainsi réduit de manière linéaire sur la période de fréquence à analyser. Le principe consiste à rapprocher les courbes de fréquence à l'endroit de la discontinuité dans une sorte de courbe impossible.

Un exemple de fenêtre de forme trapézoïdale est représenté à la figure 7 dans un diagramme (temps ou nombre d'échantillons)-amplitude normalisée. Elle permet d'atténuer ou de faire disparaître l'apparition de hautes fréquences dues à la périodisation lorsque le signal est différent d'une période multiple de la fenêtre d'analyse. Les bords du signal sont atténués au début et/ou à la fin de la fenêtre d'analyse temporelle.

La figure 8 montre le spectre exprimé en dB respectivement d'une fenêtre rectangulaire (RECT), d'une fenêtre triangulaire (TRIA) et d'une fenêtre trapézoïdale (TRAP) selon l'invention.

Cette figure montre la faible différence entre le spectre de la fenêtre trapézoïdale et celui de la fenêtre rectangulaire, en terme d'énergie, de largeur de lobe principal et de largeur de lobe secondaire. La fenêtre de type trapézoïdale permet de se rapprocher du gain obtenu par une fenêtre de type rectangulaire.

L'abscisse correspond au domaine des fréquences et l'ordonnée à l'amplitude normalisée des lobes exprimé en dB. L'axe vertical correspond au milieu du lobe.

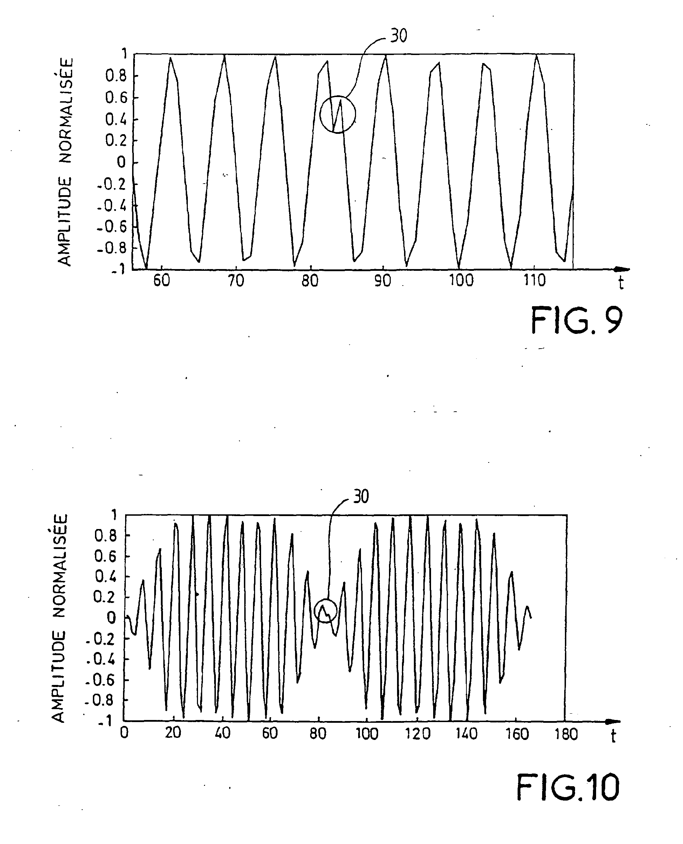

La démarche classique consiste à multiplier le signal échantillonné par une fenêtre rectangulaire qui est la fenêtre de référence. Cette approche présente comme inconvénient de faire apparaître des anomalies dans le signal, ou saut de phase référencée 30 sur les figures 9 et 10.

L'utilisation d'une fenêtre trapézoïdale, telle que décrite à la figure 7 permet d'atténuer cette anomalie 30 observée comme le montre la figure 10.

Sur ces deux figures 9 et 10, l'axe des abscisses correspond au domaine temporel, ou au nombre de points d'échantillonnage à une fréquence d'échantillonnage donnée et l'axe des ordonnées à l'amplitude du signal normalisé.

Les paramètres de la fenêtre, par exemple le temps sur lequel la fenêtre présente une atténuation au début et à la fin est par exemple égal à 2,5 fois la période du signal à échantillonner. La forme de type trapézoïdale peut être représentée à l'aide de deux portions de droite D₁ et D₂ reliées par une doite D₃, la pente des droites D₁ et D₂ étant calculée pour obtenir l'atténuation prémentionnée par exemple.

Dans l'application à la correction de la valeur du déphasage ou QDM au niveau d'un récepteur VOR, l'énergie est un paramètre important car il conditionne directement la sensibilité du récepteur. Le choix de la fenêtre d'échantillonnage résulte d'un compromis permettant d'obtenir un bon pouvoir séparateur de la fenêtre, minimiser la perte d'énergie, et un bon rapport signal/bruit.

L'utilisation d'une fenêtre de forme trapézoïdale permet en outre d'appliquer un offset de départ sur l'amplitude (sorte de Trapézoïde surélevé) de manière à réduire au minimum utile la perte d'énergie.

Cette atténuation pouvant réduire le rapport signal/bruit global du récepteur, l'objectif est de la minimiser afin de conserver le même temps d'intégration, compatible du niveau de réception souhaité d'une part et du temps de réponse de l'équipement d'autre part.

Le tableau ci-dessous regroupe les caractéristiques de différentes fenêtres

| **Fenêtre** | **Lobe secondaire (dB)** | **Largeur de pente à 3 dB (BINS)** | **Gain Cohérent (normalisé) ou perte d'énergie** |
|---|---|---|---|
| Rectangle | -13 | 0,89 | 1 |
| Triangle | -27 | 1,28 | 0.5 |
| Hamming | -43 | 1,30 | 0.54 |
| Hanning (α=1) | -23 | 1,64 | 0.64 |
| Gaussienne (α=2.5) | -42 | 1,33 | 0.51 |
| Kaiser Bessel (α=2.0) | -46 | 1,43 | 0.49 |
| **Tukey (α=0.25)** | -14 | 1,01 | 0.88 |
| | | | |
| Trapèze | -14 | 1,06 | 0.80 |

L'analyse de ce tableau montre que dans la pratique, à part les fenêtres de Tukey, la perte d'énergie est de l'ordre de 3 dB.

La plupart de ces fenêtres peuvent s'apparenter à celle de Hamming en modifiant les paramètres de l'équation.

Le but est de minimiser les phénomènes de Gibbs pour toutes les fenêtres dérivées de Hanning, d'optimiser le produit Temps Fréquence pour les Gaussiennes,...

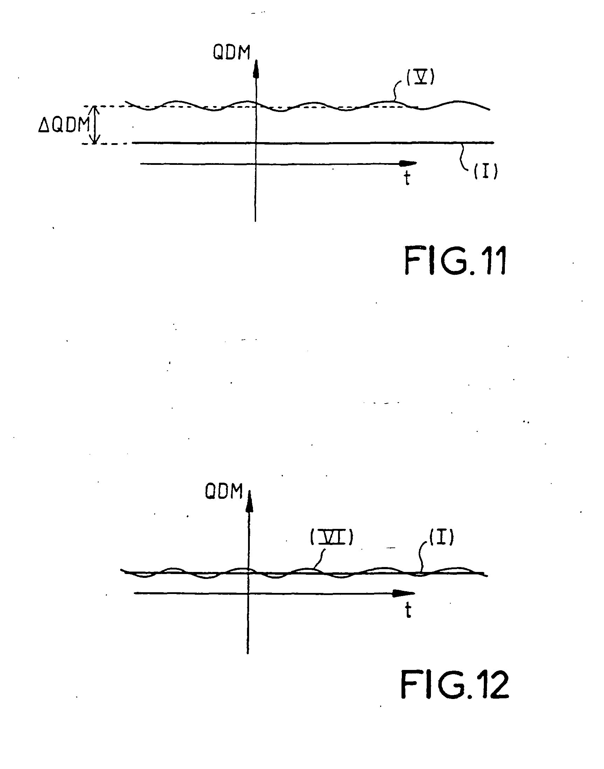

Les figures 11 et 12 schématisent la correction apportée dans la valeur du QDM en appliquant le procédé selon l'invention.

La figure 11 représente la valeur du QDM obtenue pour une valeur de fréquence de 30,3 Hz en utilisant une fenêtre trapézoïdale telle que décrite à la figure 7 pour réaliser la transformée de Fourier, afin de réduire le battement.

La figure 12 montre la valeur du QDM (VI) obtenue pour une fréquence de 30,3 Hz en utilisant un estimateur de fréquence et une fenêtre trapézoïdale pour la transformée de Fourier.

## Revendications

1. Procédé pour corriger la dérive du déphasage (Δϕ,θ) entre deux signaux (S₁) et (S₂), lesdits signaux étant générés par un signal reçu par un aéronef ayant une fréquence de référence Fe ou une période correspondante Ω, la dérive du déphasage résultant d'une dérive en fréquence ou en période selon une relation R((F,Ω),(θ,Δϕ)) donnée **caractérisé en ce qu'**il comporte au moins les étapes suivantes :
• déterminer la valeur du déphasage (Δϕ,θ), à partir de la phase ϕ1 du signal S₁ et la phase ϕ2 du signal S₂,
• estimer Fₑₛₜ la valeur de fréquence Fe, ou la période correspondante Ω,
• ramener ladite valeur (Δϕ,θ), dans un intervalle de valeurs données [QDMmin, QDMmax] contenant la valeur QDM(Fe) obtenue pour la valeur Fe de référence en tenant compte des valeurs Δϕ et Fₑₛₜ, et de la relation R((F,Ω),(θ,Δϕ)) donnée.

2. Procédé selon la revendication 1 **caractérisé en ce qu'**il comporte une étape de traitement par transformée de Fourier utilisant une fenêtre d'échantillonnage dont la forme est sensiblement trapézoïdale.

3. Procédé selon l'une des revendications 1 ou 2 **caractérisé en ce que** :
• la valeur de la fréquence Fe de référence est sensiblement égale à 30 Hz, ou la valeur de la période correspondante sensiblement égale à 2π*30Hz,
• le signal S₁ est un signal BF filtré par un filtre linéaire avant d'être échantillonné par transformée de Fourier, et le signal S₁ est au moins en partie utilisé pour estimer la fréquence Fe ou la période, Ω,
• le signal S₂ est un signal HF filtré par un filtre non linéaire avant d'être échantillonné par transformée de Fourier.

4. Procédé selon la revendication 3 **caractérisé en ce que** la forme trapézoïdale de la fenêtre est choisie pour obtenir à une fréquence 30 Hz ou une période correspondante une atténuation sur 2,5 fois la valeur de la période du signal à échantillonner S₁ ou S₂.

5. Procédé selon l'une des revendications 1 à 4 **caractérisé en ce que** la relation R((F,Ω),(θ,Δϕ)) est une fonction linéaire.

6. Procédé selon l'une des revendications 1 à 5 **caractérisé en ce que** l'intervalle de valeurs tolérables pour l'étape c) est égal à [QDM(Fe)-0,4 ; QDM(Fe)+0,4°] pour une valeur de fréquence sensiblement égale à 30 Hz ou une période correspondante sensiblement égale à 2π*30Hz et une variation de +/- 1,5%.

7. Dispositif de correction de la dérive d'un déphasage (Δϕ,θ), existant entre deux signaux (S₁) et (S₂), lesdits signaux étant générés par un signal reçu par un aéronef, ledit signal ayant une fréquence de référence Fe ou une période correspondante Ω, la dérive étant liée à la dérive en fréquence Fe selon une relation R((F,Ω),(θ,Δϕ)) donnée **caractérisé en ce qu'**il comporte au moins :
• un séparateur (21) des signaux S₁ et S₂, des moyens pour déterminer la valeur de la phase ϕ1 et ϕ2 pour chacun des signaux et un moyen pour déterminer la valeur de déphasage Δϕ,
• un estimateur (24) de la fréquence Fe ou de la période correspondante disposé après le séparateur,
• un dispositif comportant en mémoire la relation R((F,Ω),(θ,Δϕ)) recevant les valeurs Δϕ et de la fréquence estimée Fₑₛₜ ou de la période correspondante estimée, adapté pour ramener la valeur de Δϕ dans un intervalle de valeurs données [QDMmin, QDMmax] contenant la valeur QDM(Fe) obtenue pour la valeur Fe ou la période correspondante de référence.

8. Dispositif selon la revendication 7 **caractérisé en ce qu'**il comporte des moyens de traitement des signaux (S₁) et/ou (S₂) par transformée de Fourier, la fenêtre d'échantillonnage ayant une forme sensiblement trapézoïdale.

9. Dispositif selon l'une des revendications 7 ou 8 **caractérisé en ce que** le dispositif pour estimer la valeur de fréquence est un estimateur de type Prony.

10. Récepteur VOR comportant un dispositif de correction d'une dérive d'un déphasage (Δϕ,θ), existant entre deux signaux (S₁) et (S₂), lesdits signaux étant générés par un signal reçu par un aéronef, ledit signal ayant une fréquence de référence Fe, la dérive étant liée à la dérive en fréquence Fe ou à la dérive en période selon une relation R((F,Ω),(θ,Δϕ)) donnée **caractérisé en ce qu'**il comporte au moins :
• un séparateur (21) des signaux S₁ et S₂, des moyens pour déterminer la valeur de la phase ϕ1 et ϕ2 pour chacun des signaux et un moyen pour déterminer la valeur de déphasage Δϕ,
• un estimateur de la fréquence Fe ou de la période correspondante disposé après le séparateur,
• un dispositif comportant en mémoire la relation R((F,Ω),(θ,Δϕ)) recevant les valeurs Δϕ et de la fréquence estimée ou de la période correspondante estimée, adapté pour ramener la valeur de Δϕ dans un intervalle de valeurs données [QDMmin, QDMmax] contenant la valeur QDM(Fe) obtenue pour la valeur Fe (ou la période) de référence.

11. Application du procédé selon l'une des revendications 1 à 6 ou du dispositif selon l'une des revendications 7 à 10 pour réduire la variation du QDM d'un système de navigation ou de radio navigation.

## Claims

1. Method for correcting the drift of the phase shift (Δϕ,θ) between two signals (S₁) and (S₂), said signals being generated by a signal received by an aircraft having a reference frequency Fe or a corresponding period Ω, the drift of the phase shift resulting from a drift in frequency or in period according to a given relation R((F,Ω),(θ,Δϕ)), **characterized in that** it comprises at least the following steps:
• determining the value of the phase shift (Δϕ,θ), from the phase ϕ1 of the signal S₁ and the phase ϕ2 of the signal S₂,
• estimating Fₑₛₜ the frequency value Fe, or the corresponding period ϕ,
• restoring said value (Δϕ,θ), to a range of given values [QDMmin, QDMmax] containing the value QDM(Fe) obtained for the reference value Fe by taking into account the values Δϕ and Fₑₛₜ, and the given relation R((F,Ω), (θ,Δϕ)).

2. Method according to Claim 1, **characterized in that** it comprises a Fourier transform processing step using a sampling window, the form of which is substantially trapezoidal.

3. Method according to one of Claims 1 or 2, **characterized in that:**
• the value of the reference frequency Fe is substantially equal to 30 Hz, or the value of the corresponding period is substantially equal to 2π*30Hz,
• the signal S₁ is an LF signal filtered by a linear filter before being sampled by Fourier transform, and the signal S₁ is at least partly used to estimate the frequency Fe or the period Ω,
• the signal S₂ is an HF signal filtered by a nonlinear filter before being sampled by Fourier transform.

4. Method according to Claim 3, **characterized in that** the trapezoidal form of the window is chosen to obtain, at a frequency of 30 Hz or a corresponding period, an attenuation over 2.5 times the value of the period of the signal to be sampled S₁ or S₂.

5. Method according to one of Claims 1 to 4, **characterized in that** the relation R((F,Ω), (θ,Δϕ)) is a linear function.

6. Method according to one of Claims 1 to 5, **characterized in that** the range of tolerable values for the step c) is equal to [QDM(Fe)-0.4; QDM(Fe)+0.4°] for a frequency value substantially equal to 30 Hz or a corresponding period substantially equal to 2π*30Hz and a variation of +/- 1.5%.

7. Device for correcting the drift of a phase shift (Δϕ,θ), existing between two signals (S₁) and (S₂), said signals being generated by a signal received by an aircraft, said signal having a reference frequency Fe or a corresponding period Ω, the drift being linked to the drift in frequency Fe according to a given relation R((F,Ω),(θ,Δϕ)), **characterized in that** it comprises at least:
• a separator (21) of the signals S₁ and S₂, means for determining the value of the phase ϕ1 and ϕ2 for each of the signals and a means for determining the value of the phase shift Δϕ,
• an estimator (24) of the frequency Fe or of the corresponding period positioned after the separator,
• a device comprising in memory the relation R((F, Ω),(θ,Δϕ)) receiving the values Δϕ and the estimated frequency Fₑₛₜ or the estimated corresponding period, adapted to restore the value of Δϕ to a range of given values [QDMmin, QDMmax] containing the value QDM(Fe) obtained for the value Fe or the corresponding reference period.

8. Device according to Claim 7, **characterized in that** it comprises means of processing signals (S₁) and/or (S₂) by Fourier transform, the sampling window having a substantially trapezoidal form.

9. Device according to one of Claims 7 or 8, **characterized in that** the device for estimating the frequency value is a Prony-type estimator.

10. VOR receiver comprising a device for correcting a drift of a phase shift (Δϕ,θ), existing between two signals (S₁) and (S₂), said signals being generated by a signal received by an aircraft, said signal having a reference frequency Fe, the drift being linked to the drift in frequency Fe or the drift in period according to a given relation R((F,Ω),(θ,Δϕ)), **characterized in that** it comprises at least:
• a separator (21) of the signals S₁ and S₂, means for determining the value ϕ1 and ϕ2 for each of the signals and a means for determining the phase shift value Δϕ,
• an estimator of the frequency Fe or of the corresponding period positioned after the separator,
• a device comprising in memory the relation R((F,Ω),(θ,Δϕ)) receiving the values Δϕ and the estimated frequency or the estimated corresponding period, adapted to restore the value of Δϕ to a range of given values [QDMmin, QDMmax] containing the value QDM(Fe) obtained for the reference value Fe (or the period).

11. Application of the method according to one of Claims 1 to 6 or of the device according to one of Claims 7 to 10 for reducing the variation of the QDM of a navigation or radio navigation system.

## Patentansprüche

1. Verfahren zum Korrigieren der Abweichung der Phasenverschiebung (ΔΦ,θ) zwischen zwei Signalen (S1) und (S2), wobei die Signale durch ein Signal erzeugt werden, das von einem Raumschiff mit einer Referenzfrequenz Fe oder einer entsprechenden Periode Ω empfangen wird, wobei die Abweichung der Phasenverschiebung von einer Frequenz- oder Periodenabweichung nach einem gegebenen Verhältnis R((F,Ω),(θ,ΔΦ)) stammt, **dadurch gekennzeichnet, dass** es mindestens die folgenden Schritte umfasst:
- Bestimmung des Werts der Phasenverschiebung (ΔΦ,θ) aus der Phase Φ1 des Signals S1 und der Phase Φ2 des Signals S2,
- Bewertung F_{bew} des Frequenzwertes Fe oder der entsprechenden Periode Ω,
- Rückführen des Werts (ΔΦ,θ) in ein Intervall von gegebenen Werten [QDMmin, QDMmax), das den Wert QDM(Fe), der für den Referenzwert Fe unter Berücksichtigung der Werte ΔΦ und F_{bew} und des gegebenen Verhältnisses R((F,Ω),(θ,ΔΦ)) erhalten wurde, enthält.

2. Verfahren nach Anspruch 1, **dadurch gekennzeichnet, dass** es einen Schritt der Bearbeitung durch Fourier-Transformierte unter Verwendung eines Probennahmefensters mit im Wesentlichen trapezartiger Form umfasst.

3. Verfahren nach einem der Ansprüche 1 oder 2, **dadurch gekennzeichnet, dass:**
- der Wert der Referenzfrequenz Fe im Wesentlichen gleich 30 Hz oder der Wert der entsprechenden Periode im Wesentlichen gleich 2n*30Hz ist,
- das Signal S1 ein durch einen linearen Filter gefiltertes Niederfrequenzsignal vor der Probennahme durch Fourier-Transformierte ist, und das Signal S1 mindestens teilweise verwendet wird, um die Frequenz Fe oder die Periode Ω zu bewerten,
- das Signal S2 ein durch einen nicht linearen Filter gefiltertes Hochfrequenzsignal vor der Probennahme durch Fourier-Transformierte ist.

4. Verfahren nach Anspruch 3, **dadurch gekennzeichnet, dass** die Trapezform des Fensters derart gewählt wird, dass bei einer Frequenz 30 Hz oder einer entsprechenden Periode eine Dämpfung auf 2,5-mal den Wert der Periode des zu bemusternden Signals S1 oder S2 erzielt wird.

5. Verfahren nach einem der Ansprüche 1 bis 4, **dadurch gekennzeichnet, dass** das Verhältnis R((F,Ω),(θ,ΔΦ)) eine lineare Funktion ist.

6. Verfahren nach einem der Ansprüche 1 bis 5, **dadurch gekennzeichnet, dass** das Intervall von tolerierbaren Werten für den Schritt c) gleich [QDM(Fe)-0,4; QDM(Fe)+0,4] für einen Frequenzwert im Wesentlichen gleich 30 Hz oder eine entsprechende Periode im Wesentlichen gleich 2n*30Hz und eine Variation von +/- 1,5 % ist.

7. Vorrichtung zur Korrektur der Abweichung einer bestehenden Phasenverschiebung (ΔΦ,θ) zwischen zwei Signalen (S1) und (S2), wobei die Signale durch ein Signal erzeugt werden, das von einem Raumschiff empfangen wird, wobei das Signal eine Referenzfrequenz Fe oder eine entsprechende Periode Ω aufweist, wobei die Abweichung mit der Frequenzabweichung Fe nach einem gegebenen Verhältnis R((F,Ω),(θ,ΔΦ)) verbunden ist, **dadurch gekennzeichnet, dass** sie mindestens umfasst:
- eine Trenneinrichtung (21) der Signale S1 und S2, Mittel, um den Wert der Phase Φ1 und Φ2 für jedes der Signale zu bestimmen, und ein Mittel, um den Wert der Phasenverschiebung ΔΦ zu bestimmen,
- eine Bewertungseinrichtung (24) der Frequenz Fe oder der entsprechenden Periode, die nach der Trenneinrichtung vorgesehen ist,
- eine Vorrichtung, die im Speicher das Verhältnis R((F,Ω),(θ,ΔΦ)) umfasst und die Werte ΔΦ und der bewerteten Frequenz F_{bew} oder der entsprechenden bewerteten Periode aufnimmt, die dazu vorgesehen ist, den Wert von ΔΦ in ein Intervall von gegebenen Werten [QDMmin, QDMmax] zurückzuführen, das den Wert QDM(Fe) enthält, der für den Wert Fe oder die entsprechende Referenzperiode erhalten wurde.

8. Vorrichtung nach Anspruch 7, **dadurch gekennzeichnet, dass** sie Mittel zur Bearbeitung der Signale (S1) und/oder (S2) durch Fourier-Transformierte umfasst, wobei das Probennahmefenster eine im Wesentlichen trapezartige Form hat.

9. Vorrichtung nach einem der Ansprüche 7 oder 8, **dadurch gekennzeichnet, dass** die Vorrichtung zur Bewertung des Frequenzwertes eine Bewertungseinrichtung des Typs Prony ist.

10. Empfänger VOR, umfassend eine Vorrichtung zur Korrektur einer Abweichung einer Phasenverschiebung (ΔΦ,θ) die zwischen zwei Signalen (S1) und (S2) besteht, wobei die Signale durch ein Signal erzeugt werden, das von einem Raumschiff empfangen wird, wobei das Signal eine Referenzfrequenz Fe hat, wobei die Abweichung mit der Frequenz- FE oder Periodenabweichung nach einem gegebenen Verhältnis R((F,Ω),(θ,ΔΦ)) verbunden ist, **dadurch gekennzeichnet, dass** er mindestens umfasst:
- eine Trenneinrichtung (21) der Signale S1 und S2, Mittel, um den Wert der Phase Φ1 und Φ2 für jedes der Signale zu bestimmen, und ein Mittel, um den Wert der Phasenverschiebung ΔΦ zu bestimmen,
- eine Bewertungseinrichtung der Frequenz Fe oder der entsprechenden Periode, die nach der Trenneinrichtung vorgesehen ist,
- eine Vorrichtung, die im Speicher das Verhältnis R((F,Ω),(θ,ΔΦ)) umfasst und die Werte ΔΦ und der bewerteten Frequenz oder der entsprechenden bewerteten Periode aufnimmt, die dazu vorgesehen ist, den Wert von ΔΦ in ein Intervall von gegebenen Werten [QDMmin, QDMmax] zurückzuführen, das den Wert QDM(Fe) enthält, der für den Referenzwert Fe (oder die Referenzperiode) erhalten wurde.

11. Anwendung des Verfahrens nach einem der Ansprüche 1 bis 6 oder der Vorrichtung nach einem der Ansprüche 7 bis 10, um die Variation von QDM eines Navigations- oder Funknavigationssystems zu verringern.
